Europäisches Patentamt

European Patent Office

Office européen des brevets

(11) Publication number: **0 254 778**
**A1**

## (12) EUROPEAN PATENT APPLICATION

(21) Application number: 86305443.3

(22) Date of filing: 15.07.86

(51) Int. Cl.⁴: **B64G 7/00** , B01D 8/00

(43) Date of publication of application:
**03.02.88 Bulletin 88/05**

(84) Designated Contracting States:
**DE FR NL**

(71) Applicant: **PITTSBURGH-DES MOINES CORPORATION**
**3400 Grand Street Neville Island**
**Pittsburgh Pennsylvania 15225(US)**

(72) Inventor: **Murphy, John C.**
**8873 Willoughby Road**
**Pittsburgh Pennsylvania 15237(US)**
Inventor: **Swinderman, Robert H.**
**Conrad Drive R.D. 1**
**Mars Pennsylvania 16046(US)**

(74) Representative: **Cole, Paul Gilbert et al**
**HUGHES CLARK & CO. 63 Lincoln's Inn Fields**
**London WC2A 3JU(GB)**

(54) Liquid nitrogen distribution system.

(57) Apparatus for providing a simulated space environment for the testing of articles under low temperature conditions comprising a liquid nitrogen head tank (D), liquid nitrogen subcooler pumps (H), a liquid nitrogen subcooler coil (G), a liquid nitrogen head tank makeup pumps (B), a low pressure liquid nitrogen storage tank (A), a high pressure liquid nitrogen storage tank (C), a liquid nitrogen transfer pump, a vacuum chamber (E) and thermal simulation heat exchanger shrouds (CC, F) contained within the vacuum chamber (E). Appropriate internal and external piping connects these components so that the apparatus can be operted both in a subcooled pressurized closed loop system and in a gravity convection system. While liquid nitrogen in this apparatus will produce a stable uniform temperature of -173°C (-279°F) within the shrouds (CC, F) containing the article to be tested, other liquids with similar low temperature characteristics may be used. A requirement for such liquids when used as a circulating medium with the apparatus herein is that the boiling point thereof at one atmosphere will produce the required test operating temperature.

FIG. 1.

# LIQUID NITROGEN DISTRIBUTION SYSTEM

This invention relates generally to the simulation of cold temperatures in facilities utilizing a liquid medium such as freon, liquid nitrogen and helium whose boiling point at one atmosphere provides the controlling temperature. Typical facilities in which this invention could be utilized are thermal vacuum test facilities, optical test facilities, wind tunnel test facilities, coating chambers and other test and manufacturing facilities requiring the simulation of a stable thermal environment.

Thermal simulation has been accomplished in facilities to date by the application of one of the following systems: one, a closed loop, pressurized, forced flow, subcooled system; two, a gravity feed convection system; or three, a boiling mode system. However, there is no thermal simulation system known to the applicants which combines into one common operating system a closed loop, pressurized, forced flow subcooled system together with a gravity feed convection system.

Recently there has been an increasing concern as to the reliability and economic operation of thermal simulation facilities due to the critical nature of the test specimens and increased length of test periods. Thus there is an urgent need for a thermal simulation system which provides reliability, flexibility and economic operation over a wide range of requirements.

US Patent Nos 3566960, 3851274 and 4024903 may be pertinent to the present invention. None of the prior art patents teaches the utilization of liquid nitrogen, which, while never completely changing state, is allowed to change slightly into the gaseous form, and thus due to the natural convection thereof, tends to cool the device being tested in the vacuum chamber. Patent No. 3851274 generally relates to use of liquid nitrogen in a cooling system for a lazer device. Patent No. 3566960 relates to a cooling system for a process that is carried out in a vacuum chamber. Patent No. 4024903 depicts a cooling system utilizing the natural circulation of cooling water.

In one aspect the invention provides apparatus for testing articles in a simulated space environment comprising:
a circulation system means for simulating low temperatures of a space environment including:
a vacuum chamber;
internal and external piping means cooperating therewith in both a subcooled pressurized closed loop forced feed system and in a gravity convection system;
heat exchanger means in said vacuum chamber connected to said piping means and cooperating with both of said systems; and
a head tank means for supplying liquid nitrogen (LN$_2$) to both of said systems.

In a further aspect the invention provides a device for testing articles under low temperature conditions comprising: a head tank for containing liquid having low temperature characteristics, subcooler pumps, a subcooler coil, head tank makeup pumps, a low pressure liquid storage tank, a high pressure liquid storage tank, a liquid transfer pump, piping means for operatively connecting the aforesaid, and a vacuum chamber having thermal simulation shrouds therewithin; said thermal simulation shrouds within said vacuum chamber being comprised of several cylindrical zones with a top and bottom shroud providing an optically dense envelope surrounding an article to be tested.

The present invention provides a thermal simulation system in which the thermal shrouds can be maintained at a uniform controlled temperature with high heat loads which could be equal to one solar constant 1440 watts per square metre (130 watts per square foot). This same system can also provide a uniform thermal shroud temperature with high spot heat loads from the test environment. The thermal simulation system can also maintain thermal shrouds at a controlled temperature with heat loads such as 323 watts per square metre (30 watts per square foot). The above can be achieved through a gravity flow convection system. The system has the advantages that the thermal shrouds can be maintained at a controlled temperature in the event of power failure thus protecting a test article, and that consumption of the circulating liquid medium can be minimised. The thermal simulation system as defined above can be operated in either a manual mode or an automatic mode. This invention provides a liquid nitrogen circulation system which results from the combination of the characteristics of a forced flow recirculation system utilizing mechanical pumps and the characteristics of a gravity convection system utilizing a head tank and open circuits through which fluid can circulate and behave according to natural convection. In combining these two fundamental systems, hardware modifications have been made which allow certain equipment to perform in either mode while still achieving the basic objective of heat transfer from a warm body (test specimen) to heat sink panels herein described as main shrouds or auxiliary shrouds.

This invention is applicable to facilities such as thermal vacuum space vehicle test facilities, optical test facilities, wind tunnel test facilities, coating chambers and other test and manufacturing facilities requiring the simulation of a stable thermal environment. The description herein is based on the application of a thermal vacuum test facility such as would be utilized for the testing of space vehicles. The thermal simulation system for such a facility utilizes liquid nitrogen as the circulating medium to simulate the temperatures of outer space in the test envelope.

An embodiment of the invention will now be described, by way of example only, with reference to the accompanying drawings, in which:-

Fig. 1 is a schematic depiction of a facility of the present invention showing the main component units;

Fig. 2 shows the vacuum chamber from the system of Fig. 1 and the components contained therewithin;

Fig. 3 is a side elevational view of a cylindrical shroud zone;

Fig. 4 is a cross-sectional view along line 4-4 of Fig. 3.

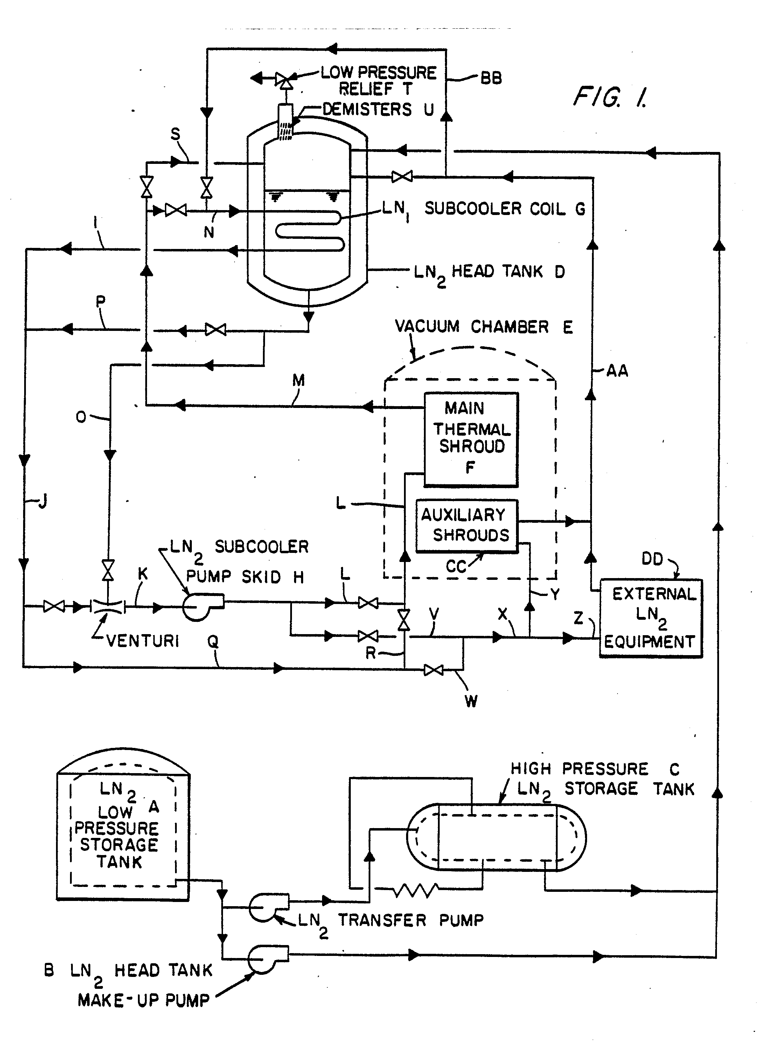

Fig. 1 shows a simplified schematic of the overall facility identifying the following main components: liquid nitrogen ($LN_2$) head tank, $LN_2$ subcooler pumps, $LN_2$ subcooler, $LN_2$ head tank makeup pumps, low pressure $LN_2$ storage tank, high pressure $LN_2$ storage tank, $LN_2$ transfer pump and vacuum chamber containing the thermal simulation shroud.

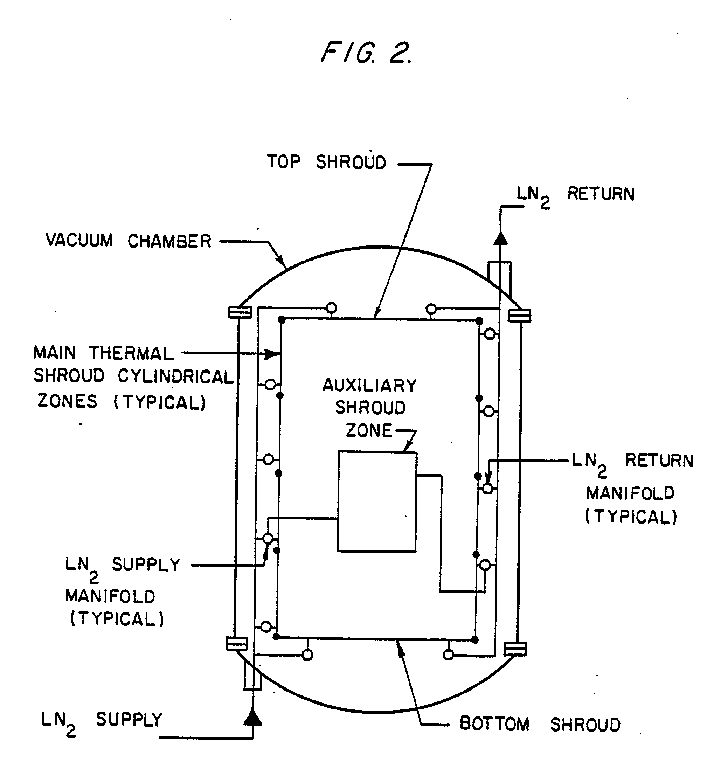

The vacuum chamber is shown enlarged in Fig. 2. The thermal shroud (F) inside the chamber is comprised of several cylindrical zones, a top and bottom shroud providing a optically dense envelope surrounding the space vehicle. The thermal vacuum facility usually requires the application of auxiliary shroud panels placed at random locations inside the test envelope. One such auxiliary shroud zone (CC) is shown in Fig. 2.

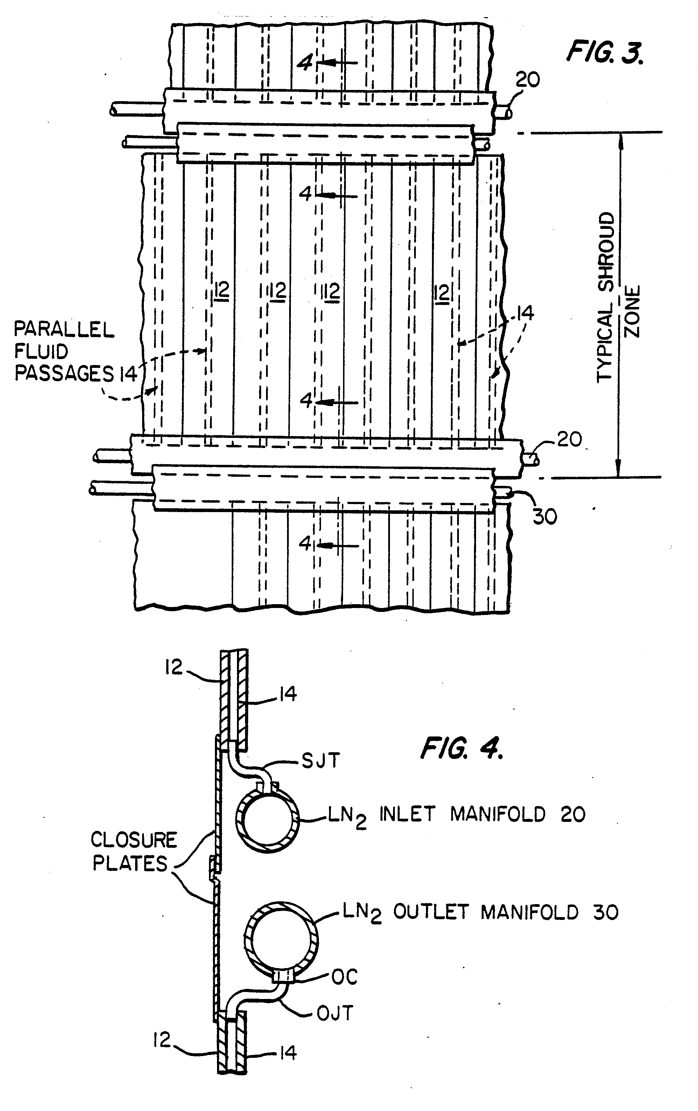

The Fig. 1 view shows the overall circulation system means for assimulating low temperatures of a space environment for test puposes. A vacuum chamber E contains therewithin main thermal shrouds F and auxiliary shrouds CC. These shrouds, which are essentially heat exchangers, are shown in structural form in Figs. 3 and 4 of the drawings. Preferably, the main thermal shroud F comprises a plurality of cylindrical shroud zones. Fig. 2 shows a cross-sectional view wherein a plurality of the cylindrical shrouds is depicted, with the top shroud and the bottom shroud of said grouping being labelled. Along the vertical right side of this Figure, the liquid nitrogen return manifolds are shown. These are the manifolds indicated by reference numeral 30 in Figs. 3 and 4 of the drawings. Along the vertical left side of Figure 2, the liquid nitrogen supply manifolds are shown. These correspond to the manifolds 20 of Figs. 3 and 4.

The liquid nitrogen ($LN_2$) is circulated through passages in the thermal shroud panels, thereby providing a stable uniform temperature of -173°C (-297°F) of the shroud exposed to the test article. As previously mentioned, the thermal facility utilized for description of this invention utilizes liquid nitrogen as the circulating medium. This invention is applicable to other liquid as a circulating medium whose boiling points at one atmosphere will produce the required operating temperature. A requirement for such liquids when used as a circulating medium with the apparatus herein is that the boiling point thereof at one atmosphere will produce the required test operating temperature.

Other components applicable to a thermal vacuum facility as depicted in Fig. 1 are not shown herein, but are a part of this invention, as follows:

1. vacuum pumping system to evacuate the vacuum chamber;

2. gaseous nitrogen system to remove $LN_2$ from shroud;

3. gaseous nitrogen thermal system to maintain shrouds at +150°C (+300°F) to -157°C (-250°F).

The following description of the invention is based on the application of an $LN_2$ thermal system as shown in Fig. 2 that will maintain the thermal shrouds inside the vacuum chamber shown therein at or near $LN_2$ temperatures. The criteria governing the design of this system are as follows:

1. thermal shroud uniform heat load 200 KW (3230 watts/square metre or 300 watts/ft²);

2. maximum shroud temperature minus 176°C (285°F); metres (58'-6) in height.

3. thermal shroud size 9.14m (30 ft) x 17.83m (58ft 6 in) in height.

The description set forth below is divided into three parts: the pressurized closed loop forced flow mode of operation; the gravity feed convection system mode of operation; and common system elements.

Part 1 - Pressurized Closed Loop Forced Flow Mode

Liquid nitrogen ($LN_2$) loss due to the heat load into the thermal shrouds (heat exchanger panels) F located in vacuum chamber E is supplied to the head tank D from the low pressure $LN_2$ storage tank A. The $LN_2$ head tank D is located at an elevation above vacuum chamber E. $LN_2$ is withdrawn from the bottom of storage tank A and pumped to the head tank D through a 23 gpm cryogenic pump B. An alternate means of supplying makeup LN₂ to the head is utilizing the high pressure LN₂ storage tank C to transfer LN₂ to the head tank D. The LN₂ head tank D is operated at or nearly equal to atmospheric pressure, and hence contains liquid boiling at thermal equilibrium saturation condition of approximately one atmosphere, thus providing a cold liquid (LN₂). The LN₂ head tank D contains an LN₂ subcooler coil G that is an integral part of the pressurized closed loop forced feed system.

LN₂ is supplied to the LN₂ subcooler pumps (180 gpm) H through conduits I, J and K which raise the system pressure to approximately 223 pa (150 psi). The LN₂ is transferred through conduit L to the thermal shrouds F located in vacuum chamber E. The thermal shrouds F are exposed to the heat loads inside vacuum chamber E. As the fluid passes through the thermal shrouds F the pressure is sufficiently high that the heat gained by the flow liquid raises the pressure in the fluid stream but it remains as a liquid (does not change phase). The liquid is then transferred through conduits M and N from the thermal shrouds F back to the LN₂ subcooler coil G which is immersed in the LN₂ in the head tank D. when the liquid passes through the coil, heat gained inside chamber E is exchanged to the colder liquid in the heat tank, causing liquid in the head tank to boil more vigorously. As the liquid in the head tank is boiled off, it is again made up from pumping from the low pressure LN₂ tank A or by pressure transfer from high pressure tank C, as previously described. After the liquid passes through the subcooler coil G, it is nearly the same temperature as the head tank liquid. The liquid then flows to the pumps G through conduits I, J and K and continues circulation.

LN₂ for startup and system losses for the closed loop system is made up from the head tank D through conduit 0 to a suction venturi located near pump H suction.

Part 2 - Gravity Feed Convection System

Liquid nitrogen (LN₂) loss due to the heat load into thermal shrouds is supplied to the head tank as previously described in Part 1. The primary difference in the gravity feed convection system is that the thermal shrouds F inside vacuum chamber E can be maintained at liquid nitrogen temperature without dependency on transfer pumps or electrical power.

LN₂ supply to the thermal shrouds F inside vacuum chamber E is provided from the liquid inside the head tank D. Liquid flows through conduits P, J, Q and R to the thermal shrouds. The inlet to the thermal shroud zone connects to the lower portion of each shroud zone. The liquid then flows progressively upward through the shroud zone or passage.

As the liquid flows it picks up heat due to heat flux from inside chamber E, thereby decreasing its density slightly, creating a pressure differential between any point in the thermal shroud and a corresponding point at the same elevation in conduit J. As the liquid continues to flow upwardly in pipe M, sufficient heat has been gained that at some elevation at or below the head tank, the liquid becomes a two-phase mixture having less density than liquid in supply pipe J at the same elevation, thereby providing the driving force for the liquid, overcoming system friction losses and causing the liquid to flow by natural convection. The two phase mixture flows back to the head tank through conduits M and S.

As shown in Figs. 3 and 4, the supply or input manifolds 20 are at the bottom of each heat exchanger structure, while the outlet manifolds 30 are at the top thereof. This, of course, corresponds with the gravity flow system effect, as described above. Of course, when the system is operated in the pressurized closed loop forced flow mode, the specific structure arrangement would not be as critical. This mode of forced flow as effected by an appropriate liquid nitrogen pump is described above. In addition to the heat exchanger structure of the thermal shrouds, it is also necessary that a liquid nitrogen head tank D be provided for supplying the liquid nitrogen in both the forced feed flow mode, as well as the gravity feed flow mode.

Part 3 - Common System Elements

The liquid capacity of the LN₂ head tank D is approximately 7600 litres (2,000 gallons). The liquid capacity of the LN₂ tank is maintained at a level sufficient to maintain the LN₂ subcooler coil G immersed in liquid. The LN₂ head tank incorporates a vapour space above the liquid that will allow phase separation of the two-phase flow returning to the head tank from the thermal shrouds through conduits M and S during the gravity feed convection system mode of operation (Part 2).

The LN₂ head tank is provided with a low pressure vapour venting system T. The venting system includes demister U to prevent loss of LN₂ through venting wet vapour.

## Thermal Shrouds and LN₂ Distribution System

The thermal shroud consists of several cylindrical shroud zones; a top shroud and a bottom shroud as shown in Fig. 2. The LN₂ supply is connected to the bottom of each zone; correspondingly, the LN₂ outlet is located at the top of each zone. Fig. 3 shows a typical detail of a portion of a cylindrical shroud zone. The LN₂ thermal shroud is comprised of a number of thermal panels 12 each provided with a fluid passage 14. The spacing of the fluid passages 14 is dependent upon the heat load into the thermal shroud. Each fluid passage in a partiuclar zone is connected to the inlet manifold 20 and an outlet manifold 30 to provide parallel liquid distribution through the shroud zone (see Fig. 4). This provides a continuous upward flow of liquid required for the gravity feed convection system mode of operation.

The individual liquid passages 14 are connected to the LN₂ inlet manifold 20 through a supply jumper tube SJT and to the LN₂ outlet manifold through an outlet jumper tube OJT (see Fig. 4). The outlet jumper tubes will be provided with an orifice coupling OC. The sizing of the orifice will insure fluid distribution throughout each shroud zone enabling a uniform thermal shroud temperature to be maintained.

The entire LN₂ distribution system including external conduits in Fig. 1 will be sized to minimize pressure drop for the gravity feed convection system mode of operation and insure that a balanced liquid flow distribution can be achieved for the operation of the combined systems.

## Auxiliary Shrouds and External LN₂ Usage

The auxiliary LN₂ shrouds CC shown in Fig. 1 may be spaced at random inside vacuum chamber E. External equipment DD requiring LN₂ supply are cryopumps and vacuum roughing line traps. The nature and location of these items may not be applicable to LN₂ supply from the gravity feed convection system (Part 2). However, supply piping is provided through conduits W, X, Y and Z to allow liquid supply to these elements. The fluid then returns to the head tank D through conduit AA.

When operating in the pressurized closed loop forced flow mode (Part 1), liquid is supplied to the auxiliary shrouds CC and external equipment DD through conduits V, X, Y and Z. Liquid is then returned to the subcooler coil G in the head tank through conduits AA and BB.

When the main thermal shrouds F located in vacuum chamber E are in the gravity feed mode of operation (Part 2), a reduced flow cryogenic pump on LN₂ subcooler skid H can be utilized to supply liquid to the auxiliary shrouds CC and external equipment DD. Liquid is supplied to the main thermal shrouds F and the LN₂ subcooler pump skid H through a common supply header conduit J. Liquid is then supplied to the auxiliary shrouds CC and external equipment DD through conduits V, X, Y and Z. Liquid is then returned to the head tank D from the above equipment through conduit AA.

## Claims

1. Apparatus for testing articles in a simulated space environment comprising:
a circulation system means for simulating low temperatures of a space environment including:
a vacuum chamber;
internal and external piping means cooperating therewith in both a subcooled pressurized closed loop forced feed system and in a gravity convection system;
heat exchanger means in said vacuum chamber connected to said piping means and cooperating with both of said systems; and
a head tank means for supplying liquid nitrogen (LN₂) to both of said systems.

2. Apparatus according to Claim 1, wherein said heat exchanger means are properly sized for accommodating the flow requirements of both the subcooled pressurized closed loop forced feed system and the gravity convection system.

3. Apparatus according to Claim 1 or 2, wherein said head tank means includes a head tank structure which is physically located above said vacuum chamber so that sufficient liquid head is provided for fluid circulation through the system when the physical principles of two-phase flow are utilized on a return leg of piping from said heat exchanger means, and said head tank having sufficient volume therewithin to allow for vapour space in the upper area thereof together with a main vent for demisting return vapour from said head tank so that same wil be dry.

4. Apparatus according to Claim 3, together with a demister, a low pressure relief valve, and outlet piping.

5. Apparatus according to any preceding claim, together with external liquid nitrogen equipment.

6. Apparatus according to any preceding claim, together with subcooler means provided in association with the liquid nitrogen head tank.

7. Apparatus according to any preceding claim, together with liquid pumps for transferring fluid under pressure through the system.

8. A device for testing articles under low temperature conditions including: a vacuum chamber having thermal simulation shrouds therewithin; said thermal simulation shrouds within said vacuum chamber being comprised of several cylindrical zones with a top and bottom shroud providing an optically dense envelope surrounding an article to be tested.

9. A device according to Claim 8, together with auxiliary shrouds placed at random locations inside the test envelope.

10. A device according to Claim 8 or 9, including means for circulating liquid nitrogen ($LN_2$) through passages in said thermal shrouds whereby a stable uniform temperature of -173°C (-287°F) is provided for the test article.

11. A device according to Claim 8, 9 or 10, wherein said thermal shrouds comprise a plurality of panels, an inlet manifold connected to each of said panels, and an outlet manifold connected likewise thereto.

12. A device according to any of Claims 8 to 11, together with an auxiliary shroud connected between said top and bottom shrouds.

0 254 778

FIG. I.

LOW PRESSURE RELIEF T
BB
DEMISTERS U
S
N
LN₁ SUBCOOLER COIL G
I
LN₂ HEAD TANK D
P
VACUUM CHAMBER E
M
AA
O
MAIN THERMAL SHROUD F
L
J
AUXILIARY SHROUDS
DD
LN₂ SUBCOOLER PUMP SKID H
CC
K
L
EXTERNAL LN₂ EQUIPMENT
V
X
Z
VENTURI Q
R
Y
W
HIGH PRESSURE C LN₂ STORAGE TANK
LN₂ A LOW PRESSURE STORAGE TANK
LN₂ TRANSFER PUMP
B LN₂ HEAD TANK MAKE-UP PUMP

FIG. 2.

FIG. 3.

PARALLEL FLUID PASSAGES 14

TYPICAL SHROUD ZONE

FIG. 4.

CLOSURE PLATES

SJT

LN₂ INLET MANIFOLD 20

LN₂ OUTLET MANIFOLD 30

OC

OJT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-1 088 196 (LUMMUS CO.)<br>* page 1, lines 55-82; page 2, lines 69-110 * | 1,8 | B 64 G 7/00<br>B 01 D 8/00 |
| A | US-A-3 301 319 (J.B. MERRILL)<br>* column 1, lines 20-29; column 2, lines 10-43 * | 1,8 | |
| A | GB-A-2 079 475 (TOKYO SHIBAURA DENKI K.K.)<br>* page 1, lines 7-15, 66-84 * | 1,8 | |
| A | US-A-3 273 636 (T.N. HICKEY et al.)<br>* column 1, lines 9-21; column 8, lines 8-63 * | 1,8 | |
| | --- | | **TECHNICAL FIELDS SEARCHED (Int. Cl.4)** |
| A | US-A-3 149 775 (F. PAGANO)<br>* column 1, lines 8-16; column 2, lines 53-65 * | 1,8 | B 01 D 8/00<br>B 64 G 7/00<br>F 04 B 37/00<br>F 25 D 3/00 |
| A | SOLID-STATE TECHNOLOGY, vol. 25, no. 7, July 1982, pages 55, 56, Port Washington, New York, US; "LN2 piping systems and semiconductor quality and yield" | 1 | G 01 M 19/00<br>H 01 J 37/00 |
| | --- -/- | | |

The present search report has been drawn up for all claims

| Place of search | Date of completion of the search | Examiner |
|---|---|---|
| BERLIN | 06-03-1987 | BRISON O.P. |

European Patent Office

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | CRYOGENICS, vol. 24, no. 9, September 1984, pages 484-493, Guildford, Surrey, GB; R.A. KILGORE et al.: "The application of cryogenics to high Reynolds number testing in wind tunnels. Part 2: Development and application of the cryogenic wind tunnel concept" | 1 | |
| | ----- | | |

TECHNICAL FIELDS SEARCHED (Int. Cl.4)

The present search report has been drawn up for all claims

| Place of search | Date of completion of the search | Examiner |
|---|---|---|
| BERLIN | 06-03-1987 | BRISON O.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  & : member of the same patent family, corresponding document

EPO Form 1503 03.82